(19) Europäisches Patentamt
European Patent Office
Office européen des brevets

(11) **EP 4 369 832 A1**

(12) **EUROPEAN PATENT APPLICATION**
published in accordance with Art. 153(4) EPC

(43) Date of publication:
**15.05.2024 Bulletin 2024/20**

(21) Application number: **22852358.5**

(22) Date of filing: **05.08.2022**

(51) International Patent Classification (IPC):
*H04W 72/12* (2023.01)    *H04W 74/08* (2009.01)

(52) Cooperative Patent Classification (CPC):
**H04W 72/12; H04W 74/00; H04W 74/08**

(86) International application number:
**PCT/CN2022/110644**

(87) International publication number:
**WO 2023/011647 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 CN 202110905967**

(71) Applicant: Huawei Technologies Co., Ltd.
**Longgang
Shenzhen, Guangdong 518129 (CN)**

(72) Inventors:
• YANG, Mao
**Shaanxi 710072 (CN)**
• LI, Bo
**Shaanxi 710072 (CN)**
• LI, Yunbo
**Shenzhen, Guangdong 518129 (CN)**
• GUO, Yuchen
**Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD, COMMUNICATION DEVICE, AND COMPUTER-READABLE STORAGE MEDIUM**

(57) This application relates to a communication method, a communication device, and a computer-readable storage medium. In the communication method, a second device receives a third protocol data unit from a first device. The third protocol data unit includes a second frame, and the second frame indicates that a first time period in a transmission opportunity of the first device is allocated for data transmission of the second device. The second device transmits a fourth protocol data unit to a third device within the first time period. A duration field in the fourth protocol data unit is set, so that when a fourth device receives a fifth protocol data unit that is from the first device and that includes a third frame, and the third frame is used to trigger data transmission of the fourth device, a basic network allocation vector associated with the fourth device is 0. In this way, the fourth device can respond to triggering, thereby improving system efficiency.

FIG. 6

## Description

### CROSS-REFERENCE TO RELATED APPLICATIONS

This application claims priority to Chinese Patent Application No. 202110905967.4, filed on August 6, 2021, and entitled "COMMUNICATION METHOD, COMMUNICATION DEVICE, AND COMPUTER-READABLE STORAGE MEDIUM".

### TECHNICAL FIELD

This application relates to the communication field, and in particular, to a communication method, a communication device, and a computer-readable storage medium in Wi-Fi communication.

### BACKGROUND

A Wi-Fi system is deployed on an unlicensed spectrum, and a plurality of stations use a channel resource through contention. A station that successfully contends for a channel may reserve the channel for a time period before data transmission. This time period is referred to as a transmission opportunity (transmit opportunity, TXOP). Within the TXOP, only the station can actively send data, and another station can only receive data or send a corresponding response frame. In the IEEE 802.11be standard, a TXOP mechanism is extended. To be specific, the station that successfully contends for the channel and serves as an access point (access point, AP) may allocate a part of time resources in the reserved TXOP to another station, so that the another station performs data transmission with other stations within the allocated time. This mechanism is referred to as triggered TXOP sharing (triggered TXOP sharing).

Currently, in the triggered TXOP sharing mechanism, when an AP allocates a first time period to a first station serving as a non-AP, the first station can communicate, within the first time period, with a second station serving as an AP or a non-AP. After the first time period ends, the AP may continue to allocate a second time period in a current TXOP to a third station serving as a non-AP for data transmission, or the AP sends a trigger frame to schedule the third station to send an uplink response frame. However, because the third station receives frames transmitted by the first station and the second station within the first time period, the third station may set a basic network allocation vector (network allocation vector, NAV), and the basic NAV is used for virtual carrier sense to determine whether channel access is allowed. Therefore, after the first time period, when the AP allocates the second time period to the third station or when the AP schedules the third station to send the uplink response frame, the basic NAV of the third station is not reduced to 0. Consequently, the third station cannot respond to allocation or scheduling.

## SUMMARY

Embodiments of this disclosure provide an improved communication solution to resolve the foregoing problem and other potential problems.

According to a first aspect of embodiments of this disclosure, a communication method is provided. The method includes: A first device generates a first protocol data unit including a first frame, where a duration field of the first frame is set based on an ending time of the first protocol data unit and an ending time of a first time period, and the first time period falls in a transmission opportunity of the first device and is allocated for data transmission of a second device. The first device sends the first protocol data unit to the second device. In this manner, a duration field of a frame from the first device may be set, so that when the first device triggers data transmission of another station after the first time period, a basic NAV associated with the another station is reduced to 0. In this case, the another station may perform data transmission in response to the trigger.

In some embodiments, the first frame may be a trigger frame, and the duration field is set to a time length from the ending time of the first protocol data unit to the ending time of the first time period. In this manner, the duration field of the trigger frame from the first device may be set, so that when the first device triggers data transmission of another station after the first time period, the basic NAV associated with the another station is reduced to 0.

In some embodiments, the first frame may be an initial frame of the transmission opportunity, and the duration field is set to a sum of a time length from the ending time of the first protocol data unit to the ending time of the first time period and a predetermined time increment. In this manner, the duration field of the initial frame of the TXOP from the first device may be set, so that when the first device triggers data transmission of another station after the first time period, the basic NAV associated with the another station is reduced to 0.

In some embodiments, the predetermined time increment may be greater than a short interframe space and less than or equal to a sum of twice the short interframe space and a time length of a second protocol data unit generated by the first device after the first time period. In this manner, the duration field of the initial frame of the TXOP from the first device may be set more effectively, so that when the first device triggers data transmission of another station after the first time period, the basic NAV associated with the another station is reduced to 0.

In some embodiments, the second protocol data unit may include a trigger frame. In this manner, the duration field of the initial frame of the TXOP from the first device may be set, so that when the first device sends the trigger frame after the first time period to trigger data transmission of another station, the basic NAV associated with the another station is reduced to 0.

In some embodiments, the first device is an access point device, and the second device is a non-access point device. In this manner, a duration field of a frame from an AP may be set, so that when the AP triggers data transmission of another station after the first time period, the basic NAV associated with the another station is reduced to 0. In this case, the another station may perform data transmission in response to the trigger.

According to a second aspect of embodiments of this disclosure, a communication method is provided. The method includes: A second device receives a third protocol data unit from a first device, where the third protocol data unit includes a second frame, and the second frame indicates that a first time period in a transmission opportunity of the first device is allocated for data transmission of the second device. The second device transmits a fourth protocol data unit to a third device within the first time period, where a duration field in the fourth protocol data unit is set, so that when a fourth device receives a fifth protocol data unit that is from the first device and that includes a third frame, and the third frame is used to trigger data transmission of the fourth device, a basic network allocation vector associated with the fourth device is 0. In this manner, a duration field of a frame from the second device within the first time period may be set, so that when the first device triggers data transmission of another station after the first time period, a basic NAV associated with the another station is reduced to 0. In this case, the another station may perform data transmission in response to the trigger.

In some embodiments, the duration field in the fourth protocol data unit may be set to a time length from an ending time of the fourth protocol data unit to an ending time of the first time period. In this manner, it may be simply implemented that when the first device allocates a second time period to another station, a basic NAV associated with the another station may be 0.

In some embodiments, the duration field in the fourth protocol data unit may be set to a time length from an ending time of the fourth protocol data unit to an ending time of a response frame for the fourth protocol data unit. In this manner, it can be more effectively ensured that when the first device triggers data transmission of another station after the first time period, a basic NAV associated with the another station is reduced to 0.

In some embodiments, the first device is an access point device, the second device and the fourth device are non-access point devices, and the third device is an access point device or a non-access point device. In this manner, a duration field of a frame from a non-AP station within the first time period may be set, so that when the AP triggers data transmission of another non-AP station after the first time period, a basic NAV associated with the another non-AP station may be reduced to 0. In this case, the another non-AP station may perform data transmission in response to the trigger.

According to a third aspect of embodiments of this disclosure, a communication method is provided. The method includes: A fourth device receives a sixth protocol data unit within a first time period, where a receiver address field or a transmitter address field in the sixth protocol data unit indicates address information of a second device, and the first time period falls in a transmission opportunity of a first device and is allocated for data transmission of the second device. The fourth device keeps a basic network allocation vector associated with the fourth device unchanged. In this manner, a station (the fourth device) may not set a basic NAV (that is, may not update the basic NAV) within the first time period, so that when the first device triggers data transmission of the station after the first time period, the basic NAV associated with the station may be 0. In this case, the station may perform data transmission in response to the trigger.

In some embodiments, the fourth device may receive a seventh protocol data unit from the first device, where the seventh protocol data unit includes a fifth frame, and the fifth frame indicates that the first time period is allocated for data transmission of the second device. The fourth device obtains the address information of the second device from the seventh protocol data unit. In this manner, the station (the fourth device) may obtain the address information of the second device, to determine, based on the address information, whether the sixth protocol data unit is received within the first time period.

In some embodiments, the fourth device may receive an eighth protocol data unit from the first device, where the eighth protocol data unit includes a sixth frame, and the sixth frame indicates that the first time period is allocated for data transmission of the second device. The fourth device receives a ninth protocol data unit from the second device, where the ninth protocol data unit is a first protocol data unit received by the fourth device after the fourth device receives a response to the eighth protocol data unit. The fourth device obtains the address information of the second device from the ninth protocol data unit. In this manner, the station (the fourth device) may also obtain the address information of the second device, to determine, based on the address information, whether the sixth protocol data unit is received within the first time period.

In some embodiments, the first device is an access point device, and the second device and the fourth device are non-access point devices. In this manner, a non-AP station (the fourth device) may not set a basic NAV within the first time period. Therefore, when the AP triggers data transmission of the non-AP station after the first time period, the basic NAV associated with the non-AP station may be 0. In this case, the non-AP station may perform data transmission in response to the trigger.

According to a fourth aspect of embodiments of this disclosure, a communication method is provided. The method includes: A second device receives a tenth protocol data unit from a first device, where the tenth protocol data unit includes a seventh frame, and the seventh frame indicates that a first time period in a transmission opportunity of the first device is allocated for data transmission of the second device. The second device transmits an eleventh protocol data unit to a third device within the first time period, where the eleventh protocol data unit includes a basic service set (BSS) color field, and the BSS color field indicates a BSS color of a BSS corresponding to the first device. In this manner, because protocol data units transmitted between the second device and the third device each include a BSS color of a BSS of the first device, a station (the fourth device) may identify the protocol data unit transmitted between the second device and the third device as an intra-BSS protocol data unit, and does not set a basic NAV (that is, does not update the basic NAV). Therefore, when the first device triggers data transmission of the station after the first time period, the basic NAV associated with the station may be 0. In this case, the station may perform data transmission in response to the trigger.

In some embodiments, the first device is an access point device, the second device is a non-access point device, and the third device is an access point device or a non-access point device. In this manner, a non-AP station may identify a protocol data unit transmitted within the first time period as an intra-BSS protocol data unit, and does not set a basic NAV (that is, does not update the basic NAV). Therefore, when an AP triggers data transmission of the non-AP station after the first time period, the basic NAV associated with the non-AP station may be 0. In this case, the non-AP station may perform data transmission in response to the trigger.

According to a fifth aspect of embodiments of this disclosure, a communication method is provided. The method includes: A second device receives a first protocol data unit that is from a first device and that includes a first frame, where a duration field of the first frame is set based on an ending time of the first protocol data unit and an ending time of a first time period, and the first time period falls in a transmission opportunity of the first device and is allocated for data transmission of the second device. In this manner, a duration field of a subsequently transmitted frame may be set based on the duration field of the first frame. Therefore, when the first device triggers data transmission of another station after the first time period, a basic NAV associated with the another station may be reduced to 0. In this case, the another station may perform data transmission in response to the trigger.

According to a sixth aspect of embodiments of this disclosure, a communication method is provided. The method includes: A first device generates a twelfth protocol data unit, where the twelfth protocol data unit indicates that a first time period in a transmission opportunity of the first device is allocated for data transmission of a second device, and the twelfth protocol data unit includes address information of the second device. The first device sends the twelfth protocol data unit. In this manner, a trigger frame includes the address information of the second device, so that a station that is triggered after the first time period to perform data transmission can obtain the address information of the second device from the trigger frame.

According to a seventh aspect of embodiments of this disclosure, a communication method is provided. The method includes: A third device receives a thirteenth protocol data unit from a first device, where the thirteenth protocol data unit includes an eighth frame, and the eighth frame indicates that a first time period in a transmission opportunity of the first device is allocated for data transmission of the second device. If a fourteenth protocol data unit from the second device is received within the first time period, the third device sends a response to the fourteenth protocol data unit to the second device, where the response includes a basic service set color field, and the basic service set color field indicates a basic service set color of a basic service set corresponding to the first device. In this manner, protocol data units sent by the third device to the second device within the first time period each may include the BSS color of the BSS corresponding to the first device.

According to an eighth aspect of embodiments of this disclosure, a communication device is provided. The device includes a processor, and a memory, including computer program code. The memory and the computer program code are configured to work with the processor to enable the communication device to perform the method in any one of the first aspect to the seventh aspect.

According to a ninth aspect of embodiments of this disclosure, a computer-readable storage medium is provided. The computer-readable storage medium includes machine-executable instructions, and when the machine-executable instructions are executed by a device, the device is enabled to perform the method in any one of the first aspect to the seventh aspect.

According to a tenth aspect of embodiments of this disclosure, a chip is provided, including a memory and a processor. The memory is configured to store a computer program, and the processor is configured to invoke the computer program from the memory and run the computer program, to perform the method in any one of the first aspect to the seventh aspect.

According to an eleventh aspect of embodiments of this disclosure, a computer program product is provided. The computer program product includes computer program code, and when the computer program code is executed by a device, the device is enabled to perform the method in any one of the first aspect to the seventh aspect.

It will be understood from the following description of example embodiments that based on the technical solution proposed herein, when an AP triggers data transmission of any associated station, the station may perform data transmission in response to the trigger. Therefore, this can reduce a collision caused by channel contention of a station, and further improve system efficiency.

It should be understood that content described in the summary part is not intended to limit the key or important features of embodiments of this disclosure, nor to limit the scope of this disclosure. The following descriptions facilitate understanding of other features of this disclosure.

## BRIEF DESCRIPTION OF DRAWINGS

The foregoing and other features, advantages, and aspects of embodiments of this disclosure become more apparent with reference to the accompanying drawings and with reference to the following detailed description. In the accompanying drawings, the same or similar reference numerals indicate the same or similar elements.

FIG. 1 is a schematic diagram of an example communication network in which an embodiment of this disclosure may be implemented;
FIG. 2 is a schematic diagram of a potential problem in a triggered TXOP sharing mechanism according to a conventional solution;
FIG. 3 is a schematic diagram of a communication process according to an embodiment of this disclosure;
FIG. 4 is a schematic diagram of an example TXOP sharing process according to an embodiment of this disclosure;
FIG. 5 is a schematic diagram of another example TXOP sharing process according to an embodiment of this disclosure;
FIG. 6 is a schematic diagram of another communication process according to an embodiment of this disclosure;
FIG. 7 is a schematic diagram of another example TXOP sharing process according to an embodiment of this disclosure;
FIG. 8 is a schematic diagram of another communication process according to an embodiment of this disclosure;
FIG. 9 is a schematic diagram of another communication process according to an embodiment of this disclosure;
FIG. 10 is a schematic flowchart of a communication method according to an embodiment of this disclosure;
FIG. 11 is a schematic flowchart of another communication method according to an embodiment of this disclosure;
FIG. 12 is a schematic flowchart of another communication method according to an embodiment of this disclosure;
FIG. 13 is a schematic flowchart of another communication method according to an embodiment of this disclosure;
FIG. 14 is a schematic block diagram of a communication apparatus according to an embodiment of this disclosure;
FIG. 15 is a schematic block diagram of another communication apparatus according to an embodiment of this disclosure;
FIG. 16 is a schematic block diagram of another communication apparatus according to an embodiment of this disclosure;
FIG. 17 is a schematic block diagram of another communication apparatus according to an embodiment of this disclosure; and
FIG. 18 is a simplified block diagram of a communication device suitable for implementing an embodiment of this disclosure.

## DESCRIPTION OF EMBODIMENTS

The following describes embodiments of this disclosure in detail with reference to the accompanying drawings. Although some embodiments of this disclosure are shown in the accompanying drawings, it should be understood that this disclosure may be implemented in various forms and should not be construed as being limited to embodiments described herein. On the contrary, these embodiments are provided so that this disclosure will be thoroughly and totally understood. It should be understood that the accompanying drawings and embodiments of this disclosure are merely used as examples, but are not intended to limit the protection scope of this disclosure.

The term "include" and variants thereof used herein indicate open inclusion, that is, "include but is not limited to". The term "based on" means "at least partially based on". The term "an embodiment" represents "at least one embodiment"; and the term "another embodiment" represents "at least one another embodiment". Related definitions of other terms are provided in the following descriptions.

It should be understood that although the terms "first", "second", and the like may be used herein to describe various components, these components should not be limited by these terms. These terms are only used to distinguish one component from another. For example, a first component may be referred to as a second component, and similarly the second component may be referred to as the first component without departing from the scope of embodiments. As used in this specification, the term "and/or" includes any and all combinations of one or more listed terms.

The term "circuit" used herein means one or more of the following:

(a) a hardware-only circuit implementation (for example, an analog-only circuit implementation and/or a digital-only circuit implementation);
(b) a combination of a hardware circuit and software, such as (if applicable): (i) a combination of an analog hardware circuit and/or a digital hardware circuit and software/firmware, and (ii) any part of a hardware processor and software (including a digital signal processor, software, and a memory that work together to enable an apparatus, such as an optical line terminal (OLT) or another computing device to perform various functions); and

(c) a hardware circuit and/or a processor, such as a microprocessor or a part of a microprocessor, which requires software (such as firmware) for an operation, but may not have software when software is not required for an operation.

The definition of a circuit is applicable to all application scenarios of the term in this application (including any claim). In another example, the term "circuit" used herein also covers an implementation of a hardware-only circuit or a processor (or a plurality of processors), or a part of a hardware circuit or a processor, or accompanying software or firmware thereof. For example, if applicable to a particular claim element, the term "circuit" also covers a baseband integrated circuit, a processor integrated circuit, or a similar integrated circuit in the OLT or the another computing device.

As used in this specification, the term "terminal device" is any device having a wireless or wired communication capability. An example of the terminal device includes but is limited to customer premise equipment (customer premise equipment, CPE), user equipment (user equipment, UE), a personal computer, a desktop computer, a mobile phone, a cellular phone, a smartphone, a personal digital assistant (personal digital assistant, PDA), a portable computer, a tablet, a wearable device, an Internet of Things (Internet of Things, IoT) device, a machine-type communication (machine-type communication, MTC) device, a vehicle-mounted device for vehicle-to-everything (vehicle-to-everything, V2X) (X means a pedestrian, a vehicle, or an infrastructure/network) communication, an image capture device such as a digital camera, a game device, a music storage and playback device, an Internet device capable of performing wireless or wired Internet access and browsing, or the like.

As used in this specification, the term "AP device" may be a device through which any wired or wireless network is accessed. For example, the wired or wireless network may be a broadband network, the Internet, a local area network, a metropolitan area network, a mobile communication network, or the like. For convenience, the AP device is also referred to as an AP station or an AP in this specification. The AP device may support, for example, a Wi-Fi protocol or any other known or future-developed similar protocol. For example, the AP device may be a wireless router, a terminal device having a router function, a network device having a router function, or the like. The term "non-AP device" may be a device configured to access any wired or wireless network through an AP device. The non-AP device may support, for example, a Wi-Fi protocol or any other known or future-developed similar protocol. For example, the non-AP device may be a terminal device, a network device, or the like. For convenience, the non-AP device is also referred to as a non-AP station or a non-AP in this specification. It should be understood that the term "station" may be an AP station, or a non-AP station. In view of rapid development of communication technologies, there will certainly be future-type communication networks and communication protocols, and the present invention may be combined with the future-type communication networks and communication protocols. It should not be considered that the scope of this disclosure is limited to the foregoing communication network and communication protocol.

It is well known that sensing needs to be performed before channel access. Usually, an NAV is set to implement virtual carrier sense. After correctly receiving a radio frame, a station may set an NAV based on information of a duration (Duration) field of the radio frame. Two NAVs: an intra-BSS NAV (Intra-BSS NAV) and a basic NAV are introduced into the IEEE 802.11ax standard for refined management. When both the intra-BSS NAV and the basic NAV are 0, the virtual carrier sense is idle. In this case, a station can perform channel access.

According to the IEEE 802.11ax standard, a station sets or updates an intra-BSS NAV when and only when a receive frame meets all of the following conditions: The receive frame is an intra-BSS physical protocol data unit (physical protocol data unit, PPDU); a value of a duration field of the receive frame is greater than a current value of an intra-BSS NAV of the station; or a receiver address (receiver address, RA) of the receive frame is not a medium access control (medium access control, MAC) address of the station, the station is not a TXOP holder (TXOP holder) and the receive frame does not trigger the station to respond immediately, or a receive station is not a TXOP holder and the receive frame is a trigger frame. In addition, a station sets or updates a basic NAV when and only when a receive frame meets all of the following conditions: The receive frame is an inter-BSS (inter-BSS) PPDU, or it cannot be distinguished whether the receive frame is an intra-BSS PPDU or an inter-BSS PPDU; a value of a duration field of the receive frame is greater than a current value of a basic NAV of the station; or an RA of the receive frame is not a MAC address of the station.

For the receive station, if a value of any one of an RA field, a transmitter address (transmitter address, TA) field, or a basic service set identifier (BSS identifier, BSSID) field in a received PPDU is equal to a BSSID of a BSS associated with the receive station, the received PPDU is an intra-BSS PPDU. If the received PPDU includes a BSSID field, and a value of the BSSID field is not equal to a BSSID of a BSS associated with the receive station, the received PPDU is an inter-BSS PPDU. If the received PPDU includes no BSSID field, and values of an RA field and a TA field are equal to a BSSID of a BSS associated with the receive station, it cannot be determined whether the received PPDU is an inter-BSS PPDU or an intra-BSS PPDU.

As mentioned above, in a current triggered TXOP sharing mechanism, after an AP allocates a first time period to a first station, the AP may continue to allocate, after the first time period ends, a second time period in a current TXOP to a second station for data transmission, or may schedule the second station to perform uplink sending. Based on the foregoing setting or updating condition of the basic NAV, because the second station receives a frame transmitted between the first station and another station within the first time period, the second station may set or update the basic NAV. Therefore, when the AP triggers data transmission of the second station after the first time period, a basic NAV of the second station is not reduced to 0. In this case, the second station cannot respond, to be specific, cannot perform data transmission in response to the trigger.

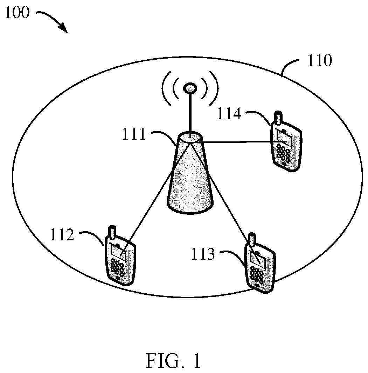

In view of this, embodiments of this disclosure provide an improved communication solution, so that the basic NAV of the second station is 0 when the AP triggers data transmission of the second station, to resolve the foregoing problem and other potential problems. Therefore, it can be ensured that the second station normally responds to the trigger when the AP triggers data transmission of the second station, thereby improving system efficiency. For ease of understanding, the following describes this in detail with reference to FIG. 1 to FIG. 18.

FIG. 1 is a schematic diagram of an example communication network 100 in which an embodiment of this disclosure may be implemented. As shown in FIG. 1, the network 100 may include a first device 111 and a second device 112, a third device 113, and a fourth device 114 in a serving cell 110 of the first device 111. The second device 112, the third device 113, and the fourth device 114 may communicate with the first device 111, to access a wired or wireless network through the first device 111. Communication within the communication network 100 may comply with a Wi-Fi protocol or any other known or future-developed similar protocol.

Although the first device 111 is shown herein as a network device, and the second device 112, the third device 113, and the fourth device 114 are shown as terminal devices, it should be understood that this is merely an example, and the first device 111, the second device 112, the third device 113, and the fourth device 114 may be in any other proper form. For example, the first device 111 may be a terminal device, and any one of the second device 112, the third device 113, and the fourth device 114 may also be a network device. In general, embodiments of this disclosure are not only applicable to single-user uplink or downlink transmission and multi-user uplink or downlink transmission, but also applicable to device-to-device (device-to-device, D2D) transmission. This is not particularly limited in this disclosure.

In this example, although the first device 111 is shown as an AP station and the second device 112, the third device 113, and the fourth device 114 are shown as non-AP stations herein, it should be understood that this is merely an example. Any one of the first device 111, the second device 112, the third device 113, and the fourth device 114 may be an AP station or a non-AP station. It should be understood that a quantity of AP stations or non-AP stations is not limited to the example shown in FIG. 1, but may be any other proper larger or smaller quantity. In general, embodiments of this disclosure are not only applicable to communication between one AP and one or more non-APs, but also applicable to communication between one non-AP and one or more APs. In addition, embodiments of this disclosure may also be applicable to communication between non-APs, or communication between APs. This is not particularly limited in this disclosure.

In some scenarios of a triggered TXOP sharing mechanism, the first device 111 may allocate a first time period in a TXOP of the first device to the second device 112, for data transmission of the second device 112. For example, the second device 112 performs data transmission with the third device 113 within the first time period. The first device 111 may trigger data transmission of the fourth device 114 after the first time period. For example, the first device 111 may continue to allocate a second time period in a remaining TXOP of the first device to the fourth device 114, for data transmission of the fourth device 114. Alternatively, the first device 111 may trigger the fourth device 114 to perform uplink sending. It should be understood that data transmission of the fourth device 114 may be data transmission between the fourth device 114 and any other station serving as an AP or a non-AP. The data transmission may include transmission, performed by the fourth device 114, of a response frame triggered by the first device 111, or may include transmission of a data frame or a control frame between the fourth device 114 and another station (for example, the first device 111, the second device 112, the third device 113, or any other proper device). This is not particularly limited in embodiments of this disclosure.

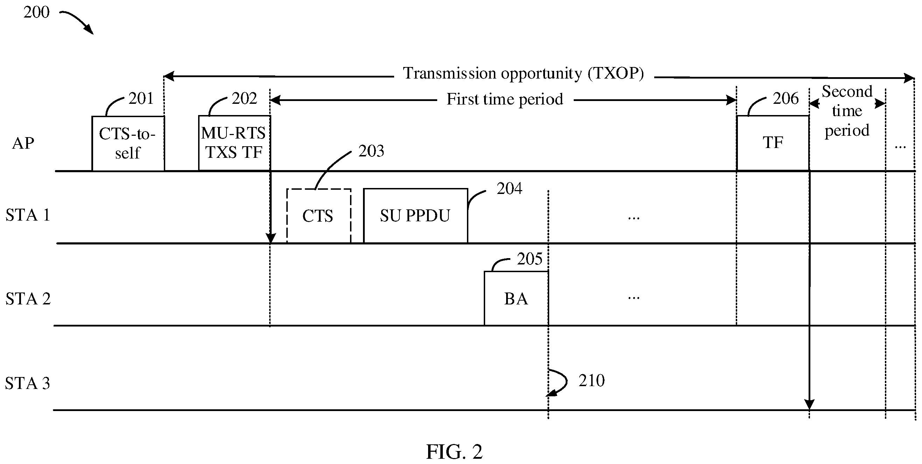

FIG. 2 is a schematic diagram 200 of a potential problem in a triggered TXOP sharing mechanism according to a conventional solution. As shown in FIG. 2, after successfully contending for a channel, an AP may send an initial frame 201 of a TXOP, for example, a CTS-to-self frame, to enable a TXOP. The AP may send a trigger frame 202, for example, an MU-RTS TXS TF frame, to allocate a first time period in the TXOP to a STA 1. After receiving the trigger frame 202, the STA 1 may send a response frame 203, for example, a CTS frame, to the AP. Then, the STA 1 may send a data frame 204, for example, an SU PPDU, to a STA 2, and the STA 2 may send a response frame 205, for example, a BA frame, for the data frame 204 to the STA 1. In this manner, the STA 1 may perform data transmission with the STA 2 within the first time period. After the first time period, the AP may send a trigger frame 206, for example, a TF frame, to allocate a second time period in the TXOP to a STA 3, or schedule the STA 3 to perform uplink sending.

However, during the first time period, the STA 3 may also receive the data frame 204 and the response frame 205, and may therefore set a basic NAV associated with the STA 3, which is labeled 210. Specifically, if the STA 2 belongs to a BSS of the AP, because the response frame 205 used as a control frame does not include a BSSID field, when the STA 2 sends the response frame 205, the STA 3 sets the basic NAV based on the duration field of the control frame. If the STA 2 does not belong to a BSS of the AP, although the data frame 204 sent by the STA 1 to the STA 2 includes a BSSID field, if a value of the BSSID field is not equal to a BSSID of the BSS of the AP, the STA 3 also sets the basic NAV because that the STA 3 receives the data frame 204 sent by the STA 1 to the STA 2.

As described above, a station sets or updates a basic NAV when and only when a receive frame meets all of the following conditions: The receive frame is an inter-BSS PPDU, or it cannot be distinguished whether the receive frame is an intra-BSS PPDU or an inter-BSS PPDU; a value of a duration field of the receive frame is greater than a current value of the basic NAV of the station; or an RA of the receive frame is not a MAC address of the station. In the scenario shown in FIG. 2, because the STA 3 meets the setting or updating condition of the basic NAV within the first time period, the STA 3 sets or updates the basic NAV. As a result, when the AP sends the trigger frame 206 to the STA 3, the basic NAV of the STA 3 is not 0, and therefore the STA 3 cannot perform channel access. In other words, the STA 3 cannot perform data transmission in response to the trigger frame 206.

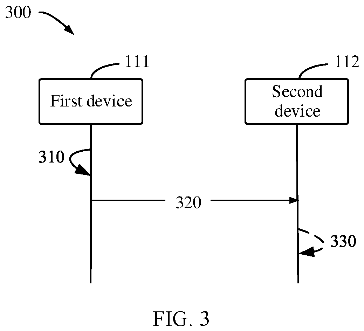

In view of this, according to some embodiments of this disclosure, a duration field of a frame before or within the first time period may be set, so that the basic NAV set by the STA 3 when the AP triggers data transmission of the STA 3 may be reduced to 0. According to some embodiments of this disclosure, a condition of not updating the basic NAV may be set, so that the STA 3 does not set the basic NAV within the first time period, that is, the basic NAV is kept at 0. For ease of understanding, the following describes this in detail with reference to FIG. 3 to FIG. 9.

FIG. 3 is a schematic diagram of a communication process 300 according to an embodiment of this disclosure. For convenience, the following describes FIG. 3 by using an example in FIG. 1. The process 300 may include the first device 111 and the second device 112. It should be understood that the process in FIG. 3 may include other additional steps that are not shown, or some shown steps may be omitted. The scope of this disclosure is not limited thereto. In this example, it is assumed that the first device 111 has a TXOP and is to allocate a first time period in the TXOP to the second device 112. In addition, it is assumed that the second device 112 performs data transmission with the third device 113 within the first time period, and the first device 111 triggers data transmission of the fourth device 114 after the first time period.

As shown in FIG. 3, the first device 111 generates a first protocol data unit including a first frame (310). A duration field of the first frame is set based on an ending time of the first protocol data unit and an ending time of the first time period. The first time period falls in the TXOP of the first device 111 and is allocated for data transmission of the second device 112. The first frame may be any frame before the first time period. The first device 111 sends the generated first protocol data unit to the second device 112 (320). The second device 112 may set a duration field of a subsequent frame based on the duration field in the first protocol data unit (330).

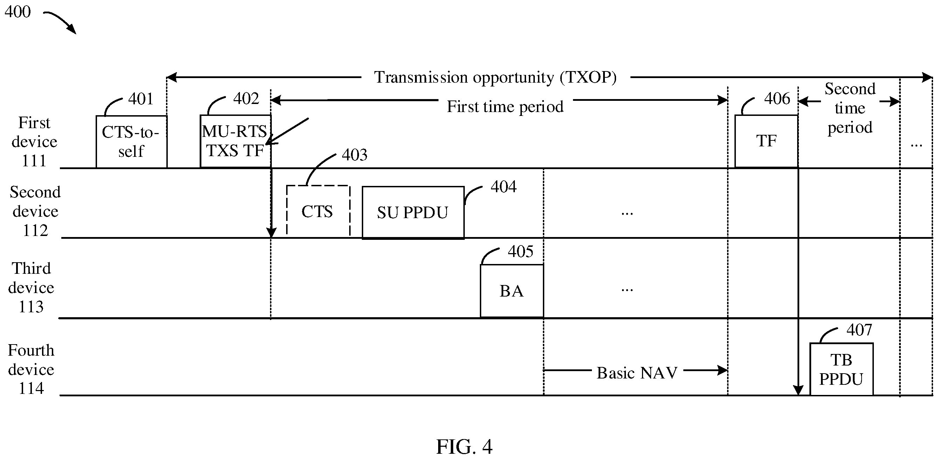

In some embodiments, the first frame may be a trigger frame. The trigger frame may indicate that the first time period in the TXOP is allocated for data transmission of the second device 112. In these embodiments, the duration field of the trigger frame may be set to a time length from the ending time of the first protocol data unit to the ending time of the first time period. Therefore, the duration field of the subsequent frame may also be correspondingly set to a time length from an ending time of a protocol data unit including the subsequent frame to the ending time of the first time period. In this case, an ending time of a basic NAV set by the fourth device 114 may be the ending time of the first time period. In this way, when the fourth device 114 receives the trigger frame from the first device 111, the basic NAV has been reduced to 0. The following provides detailed descriptions with reference to FIG. 4.

FIG. 4 is a schematic diagram of an example TXOP sharing process 400 according to an embodiment of this disclosure. As shown in FIG. 4, after successfully contending for a channel, the first device 111 may send an initial frame 401 of a TXOP, to enable a TXOP. In some embodiments, the initial frame 401 of the TXOP may be a CTS-to-self frame. Certainly, the initial frame 401 of the TXOP may alternatively be any other proper type of frame. This is not particularly limited in this disclosure.

The first device 111 may send a trigger frame 402, to allocate the first time period in the TXOP to the second device 112. In some embodiments, the trigger frame 402 may include information about the first time period and an association identifier (association identifier, AID) of the second device 112. For example, the trigger frame 402 may be an MU-RTS TXS TF frame. Certainly, the trigger frame 402 may alternatively be another proper type of frame. This is not particularly limited in this disclosure.

According to this embodiment of this disclosure, the first device 111 may set a duration field of the trigger frame 402, so that when the first device 111 triggers data transmission of the fourth device 114, the basic NAV associated with the fourth device 114 may be reduced to 0. In some embodiments, the duration field of the trigger frame 402 may be set to a time length from an ending time of a PPDU corresponding to the trigger frame 402 to the ending time of the first time period.

After receiving the trigger frame 402, the second device 112 may send a response frame 403 to the first device 111. For example, the response frame 403 may be a CTS frame. Certainly, the response frame 403 may alternatively be another proper type of frame, which is not limited thereto. Then, the second device 112 may send a data frame 404 to the third device 113. For example, the data frame 404 may be an SU PPDU. Certainly, the data frame 404 may alternatively be another proper type of frame, which is not limited thereto. The third device 113 may send a response frame 405 for the data frame 404 to the first device 111. For example, the response frame 405 may be a BA frame. Certainly, the response frame 405 may alternatively be another proper type of frame, which is not limited thereto. In this manner, the second device 112 may perform data transmission with the third device 113 within the first time period.

After the first time period, the first device 111 may send a trigger frame 406 to the fourth device 114, to trigger data transmission of the fourth device 114. For example, a second time period in the TXOP is allocated to the fourth device 114 for data transmission of the fourth device 114, or the fourth device 114 is scheduled to perform uplink sending or the like. For example, the trigger frame 406 may be a TF frame. Certainly, the trigger frame 406 may alternatively be an MU-RTS TXS TF frame. Certainly, the trigger frame 406 may alternatively be another proper type of frame, which is not limited thereto.

Usually, a duration field in a current PPDU may be set to a value obtained by subtracting a short interframe space (short inter-frame spacing, SIFS) from a value of a duration field in a previous PPDU and then subtracting a time length of the current PPDU. That is, the duration field in the current PPDU may be set to a time length from an ending time of the current PPDU to the ending time of the first time period. Therefore, it may be determined that because the duration field of the trigger frame 402 is set to the time length from the ending time of the PPDU corresponding to the trigger frame 402 to the ending time of the first time period, a duration field of a subsequent frame of the trigger frame 402 is also correspondingly set to a time length from an ending time of a PPDU corresponding to the subsequent frame to the ending time of the first time period.

In this way, the fourth device 114 may set the basic NAV based on the duration field of the data frame 404 or the response frame 405 transmitted between the second device 112 and the third device 113, and the ending time of the basic NAV is the ending time of the first time period. Therefore, when the first device 111 sends the trigger frame 406 to the fourth device 114 after the first time period, the basic NAV of the fourth device 114 has changed to 0. In this case, the fourth device 114 may send a data frame 407 in response to the trigger frame 406. For example, the data frame 407 may be a TB PPDU. Certainly, this is only an example, and the data frame 407 may alternatively be any other proper frame. In some embodiments, when the first device 111 sends the trigger frame 406, a duration field of the trigger frame 406 may be set based on an ending time of the TXOP. Certainly, in some embodiments, a duration field of the trigger frame 406 may alternatively be set based on an ending time of the second time period.

It should be understood that, although the frames or the PPDUs 401 to 407 are shown as specific frames in FIG. 4, this is merely an example for description, and this application is not limited thereto.

In some alternative embodiments, the first frame may alternatively be an initial frame of the TXOP. In these embodiments, the duration field of the initial frame of the TXOP may be set to a sum of a time length from the ending time of the first protocol data unit to the ending time of the first time period and a predetermined time increment (which is denoted as Delta_T for convenience). In other words, the first device 111 may set the duration field of the initial frame of the TXOP to T, and set the trigger frame to indicate that a difference between the ending time of the first time period and a moment indicated by T is less than Delta_T. In this manner, a difference between the ending time of the TXOP and the ending time of the first time period may be equal to the predetermined time increment Delta_T. In this way, the ending time of the basic NAV set by the fourth device 114 may be the ending time of the first time period. When the fourth device 114 receives the trigger frame from the first device 111, the basic NAV has been reduced to 0.

In some embodiments, the predetermined time increment Delta T may be greater than the SIFS and less than or equal to a sum of twice the short interframe space and a time length of a second protocol data unit generated by the first device 111 after the first time period, as shown in formula (1) below.

$$T1+2*T2 \geq Delta\_T > T2 \quad (1)$$

Delta_T indicates the predetermined time increment, T1 indicates the time length of the second protocol data unit generated by the first device 111 after the first time period, and T2 indicates a time length of the SIFS.

In some alternative embodiments, the predetermined time increment Delta T may be greater than or equal to a sum of the SIFS and a shortest frame time length and less than or equal to a sum of twice the short interframe space and a time length of a second protocol data unit generated by the first device 111 after the first time period, as shown in formula (2) below.

$$T1+2*T2 \geq Delta\_T \geq T2+T3 \quad (2)$$

Delta_T indicates the predetermined time increment, T1 indicates the time length of the second protocol data unit generated by the first device 111 after the first time period, T2 indicates a time length of the SIFS, and T3 indicates the shortest frame time length. It should be understood that formulas (1) and (2) are merely examples, and the predetermined time increment Delta_T may be determined in any other proper manner.

In some embodiments, the second protocol data unit may include a trigger frame. For example, the trigger frame may indicate that the second time period in the TXOP is allocated for data transmission of the fourth device 114. In some embodiments, a time length of the trigger frame may be determined by the first device 111. In some embodiments, the shortest frame time length may be predefined.

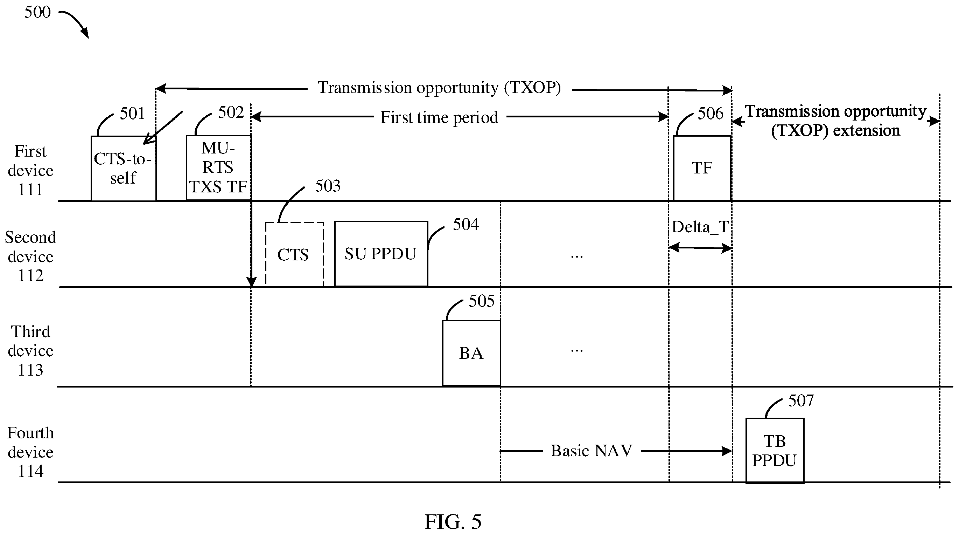

In some embodiments, when sending a PPDU after the first time period, the first device 111 may extend an ending time indicated by a duration field in the PPDU backward. However, extended time is still limited by a total time length of the TXOP, to be specific, the ending time indicated by the duration field in the PPDU cannot exceed an ending time of the initial frame of the TXOP plus a TXOP limit. In some embodiments, the TXOP limit may be indicated by the first device 111 in a beacon frame. In some embodiments, the TXOP limit value may be predefined. The following provides detailed descriptions with reference to FIG. 5.

FIG. 5 is a schematic diagram of another example TXOP sharing process 500 according to an embodiment of this disclosure. As shown in FIG. 5, after successfully contending for a channel, the first device 111 may send an initial frame 501 of a TXOP, to enable TXOP timing. In some embodiments, the initial frame 501 of the TXOP may be a CTS-to-self frame. Certainly, the initial frame 501 of the TXOP may alternatively be any other proper type of frame. This is not particularly limited in this disclosure. A duration field of the initial frame 501 of the TXOP may be set to a sum of a time length from an ending time of a PPDU corresponding to the initial frame 501 of the TXOP to the ending time of the first time period and a predetermined time increment Delta_T.

The first device 111 may send a trigger frame 502, to allocate the first time period in the TXOP to the second device 112. In some embodiments, the trigger frame 502 may include information about the first time period and an AID of the second device 112. For example, the trigger frame 502 may be an MU-RTS TXS TF frame. Certainly, the trigger frame 502 may alternatively be another proper type of frame. This is not particularly limited in this disclosure. After receiving the trigger frame 502, the second device 112 may send a response frame 503 to the first device 111. For example, the response frame 503 may be a CTS frame. Certainly, the response frame 503 may alternatively be another proper type of frame, which is not limited thereto. Then, the second device 112 may send a data frame 504 to the third device 113. For example, the data frame 504 may be an SU PPDU. Certainly, the data frame 504 may alternatively be another proper type of frame, which is not limited thereto. The third device 113 may send a response frame 505 for the data frame 504 to the first device 111. For example, the response frame 505 may be a BA frame.

Certainly, the response frame 505 may alternatively be another proper type of frame, which is not limited thereto. In this manner, the second device 112 may perform data transmission with the third device 113 within the first time period.

After the first time period, the first device 111 may send a trigger frame 506 to the fourth device 114, to trigger data transmission of the fourth device 114. For example, a second time period in the TXOP may be allocated to the fourth device 114 for data transmission of the fourth device 114, or the fourth device 114 is scheduled to perform uplink sending or the like. For example, the trigger frame 506 may be a TF frame. Certainly, the trigger frame 506 may alternatively be an MU-RTS TXS TF frame. Certainly, the trigger frame 506 may alternatively be another proper type of frame, which is not limited thereto.

Because the duration field of the initial frame 501 of the TXOP is set to the sum of the time length from the ending time of the PPDU corresponding to the initial frame 501 of the TXOP to the ending time of the first time period and the predetermined time increment Delta_T, a duration field of a subsequent frame of the initial frame is also correspondingly set to a sum of a time length from an ending time of a PPDU corresponding to the subsequent frame to the ending time of the first time period and the predetermined time increment Delta_T.

In this way, when the fourth device 114 sets the basic NAV based on the duration field of the data frame 504 or the response frame 505 transmitted between the second device 112 and the third device 113, the ending time of the basic NAV is also a Delta_T moment after the first time period ends. After the first time period, the first device 111 may send the trigger frame 506 to the fourth device 114, to allocate the second time period in TXOP extension to the fourth device 114 or schedule uplink sending of the fourth device 114. Therefore, when the trigger frame 506 sent by the first device 111 to the fourth device 114 ends, the basic NAV of the fourth device 114 has changed to 0. In this case, the fourth device 114 may send a data frame 507 in response to the trigger frame 506. For example, the data frame 507 may be a TB PPDU. Certainly, this is only an example, and the data frame 507 may alternatively be any other proper frame. In some embodiments, when the first device 111 sends the trigger frame 506, a duration field of the trigger frame 506 may be set based on an ending time of the TXOP. Certainly, in some embodiments, a duration field of the trigger frame 506 may alternatively be set based on an ending time of the second time period.

It should be understood that, although the frames or the PPDUs 501 to 507 are shown as specific frames in FIG. 5, this is merely an example for description, and this application is not limited thereto.

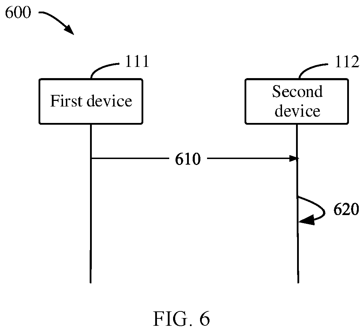

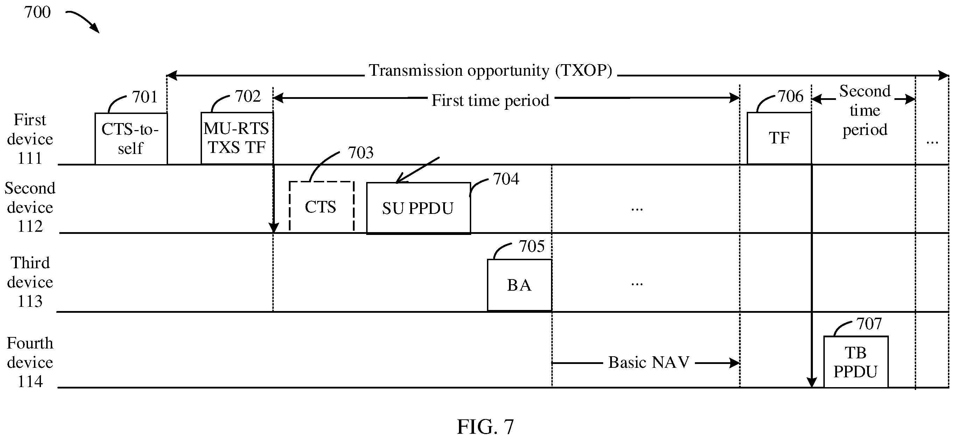

With reference to FIG. 3 to FIG. 5, the foregoing describes the solution of setting a duration field of a frame (that is, setting a duration field of a frame before the first time period) on an AP side. With reference to FIG. 6 and FIG. 7, the following describes the solution of setting a duration field of a frame (that is, setting a duration field of a frame within the first time period) on a non-AP side.

FIG. 6 is a schematic diagram of another communication process 600 according to an embodiment of this disclosure. For convenience, the following describes FIG. 6 by using an example in FIG. 1. The process 600 may include the first device 111 and the second device 112. It should be understood that the process in FIG. 6 may include other additional steps that are not shown, or some shown steps may be omitted. The scope of this disclosure is not limited thereto. In this example, it is assumed that the first device 111 has a TXOP and is to allocate a first time period in the TXOP to the second device 112. In addition, it is assumed that the second device 112 performs data transmission with the third device 113 within the first time period, and the first device 111 triggers data transmission of the fourth device 114 after the first time period.

As shown in FIG. 6, the first device 111 sends a third protocol data unit including a second frame to the second device 112 (610). The second frame indicates that the first time period in the TXOP of the first device 111 is allocated for data transmission of the second device 112. For example, the second frame may be a trigger frame or another similar frame. The second device 112 performs data transmission within the first time period in response (620). For example, a fourth protocol data unit is transmitted between the second device 112 and the third device 113 within the first time period. According to this embodiment of this disclosure, the second device 112 sets a duration field in the fourth protocol data unit, so that when the first device 111 triggers data transmission of the fourth device 114, a basic NAV associated with the fourth device 114 is 0. For example, when the fourth device 114 receives a fifth protocol data unit including a third frame from the first device 111 and the third frame is used to trigger data transmission of the fourth device 114, the basic NAV associated with the fourth device 114 is 0. For example, the third frame may be a trigger frame or another similar frame.

In some embodiments, the duration field in the fourth protocol data unit is set to a time length from an ending time of the fourth protocol data unit to an ending time of the first time period. In some embodiments, the fourth protocol data unit may be any protocol data unit after a response frame for the third protocol data unit. Therefore, a duration field of a subsequent frame may also be correspondingly set to a time length from an ending time of a protocol data unit including the subsequent frame to the ending time of the first time period. In this case, an ending time of the basic NAV set by the fourth device 114 may be the ending time of the first time period. In this way, when the fourth device 114 receives a trigger frame from the first device 111, the basic NAV has been reduced to 0. The following provides detailed descriptions with reference to FIG. 7.

FIG. 7 is a schematic diagram of another example TXOP sharing process 700 according to an embodiment of this disclosure. As shown in FIG. 7, after successfully contending for a channel, the first device 111 may send an initial frame 701 of a TXOP, to enable TXOP timing. In some embodiments, the initial frame 701 of the TXOP may be a CTS-to-self frame. Certainly, the initial frame 701 of the TXOP may alternatively be any other proper type of frame. This is not particularly limited in this disclosure.

The first device 111 may send a trigger frame 702, to allocate the first time period in the TXOP to the second device 112. In some embodiments, the trigger frame 702 may include information about the first time period and an AID of the second device 112. For example, the trigger frame 702 may be an MU-RTS TXS TF frame. Certainly, the trigger frame 702 may alternatively be another proper type of frame. This is not particularly limited in this disclosure.

After receiving the trigger frame 702, the second device 112 may send a response frame 703 to the first device 111. For example, the response frame 703 may be a CTS frame. Certainly, the response frame 703 may alternatively be another proper type of frame, which is not limited thereto. Then, the second device 112 may send a data frame 704 to the third device 113. For example, the data frame 704 may be an SU PPDU. Certainly, the data frame 704 may alternatively be another proper type of frame, which is not limited thereto. According to this embodiment of this disclosure, a duration field of the data frame 704 may be set to a time length from an ending time of a PPDU corresponding to the data frame 704 to the ending time of the first time period.

The third device 113 may send a response frame 705 for the data frame 704 to the first device 111. For example, the response frame 705 may be a BA frame. Certainly, the response frame 705 may alternatively be another proper type of frame, which is not limited thereto. After the first time period, the first device 111 may send a trigger frame 706 to the fourth device 114, to trigger data transmission of the fourth device 114. For example, a second time period in the TXOP may be allocated to the fourth device 114 for data transmission of the fourth device 114, or the fourth device 114 is scheduled to send an uplink response frame. For example, the trigger frame 706 may be a TF frame. Certainly, the trigger frame 706 may alternatively be an MU-RTS TXS TF frame. Certainly, the trigger frame 706 may alternatively be another proper type of frame, which is not limited thereto.

As described above, the second device 112 sets a duration field in a first PPDU after the response frame 703 for the trigger frame 702 to a time length from an ending time of the PPDU to the ending time of the first time period. Correspondingly, when sending the response frame 705 for the data frame 704, the third device 113 may set a duration field of the response frame 705 to a value obtained by subtracting an SIFS from a value of a duration field in a previous PPDU and then subtracting a time length of a current PPDU. That is, the duration field of the response frame 705 may be set to a time length from an ending time of a PPDU corresponding to the response frame 705 to the ending time of the first time period.

In this way, when the fourth device 114 sets the basic NAV based on the duration field of the data frame 704 or the response frame 705 transmitted between the second device 112 and the third device 113, the ending time of the basic NAV is the ending time of the first time period. Therefore, when the first device 111 sends the trigger frame 706 to the fourth device 114 after the first time period, the basic NAV of the fourth device 114 has changed to 0. In this case, the fourth device 114 may send a data frame 707 in response to the trigger frame 706. For example, the data frame 707 may be a TB PPDU. Certainly, this is only an example, and the data frame 707 may alternatively be any other proper frame.

It should be understood that, although the frames or the PPDUs 701 to 707 are shown as specific frames in FIG. 7, this is merely an example for description, and this application is not limited thereto.

In the foregoing embodiment, the duration field in the fourth protocol data unit is set to the time length from the ending time of the fourth protocol data unit to the ending time of the first time period. In this case, if the second device 112 ends TXOP sharing in advance, that is, the second device 112 returns TXOP control to the first device 111 before the first time period ends, the first device 111 may send the trigger frame to the fourth device 114 before the first time period ends. In this case, the basic NAV of the fourth device 114 is not 0, and therefore the fourth device 114 cannot respond to the trigger frame from the first device 111. As a solution, in some embodiments, the first device 111 may not send the trigger frame to the fourth device 114 before the first time period ends. In some embodiments, the first device 111 may also send a frame other than the trigger frame. For example, the device 111 may send a control frame other than a data frame, a management frame, or a trigger frame.

In some alternative embodiments, the second device 112 may alternatively set the duration field in the fourth protocol data unit to a time length from the ending time of the fourth protocol data unit to an ending time of a response frame for the fourth protocol data unit. In this manner, it can be ensured that when the first device 111 sends the trigger frame 706 to the fourth device 114, the basic NAV of the fourth device 114 has changed to 0. This is still described with reference to FIG. 7.

In this case, the duration field of the data frame 704 is a time length from the ending time of the PPDU corresponding to the data frame 704 to an ending time of the response frame 705 for the data frame 704. Correspondingly, when sending the response frame 705, the third device 113 sets the duration field of the response frame 705 to 0. When the second device 112 sends a next PPDU (not shown), similarly, a duration field of the next PPDU is set to a time length from an ending time of the next PPDU and an ending time of a response frame for the next PPDU. Correspondingly, when sending the response frame (not shown) for the next PPDU, the third device 113 sets a duration field of the response frame to 0. The rest can be deduced by analogy. When the fourth device 114 sets the basic NAV based on a frame sent by the second device 112 or the third device 113, the ending time of the basic NAV is a current frame exchange ending time. Therefore, when the first device 111 sends the trigger frame 706 to the fourth device 114 after the first time period, the basic NAV of the fourth device 114 has changed to 0.

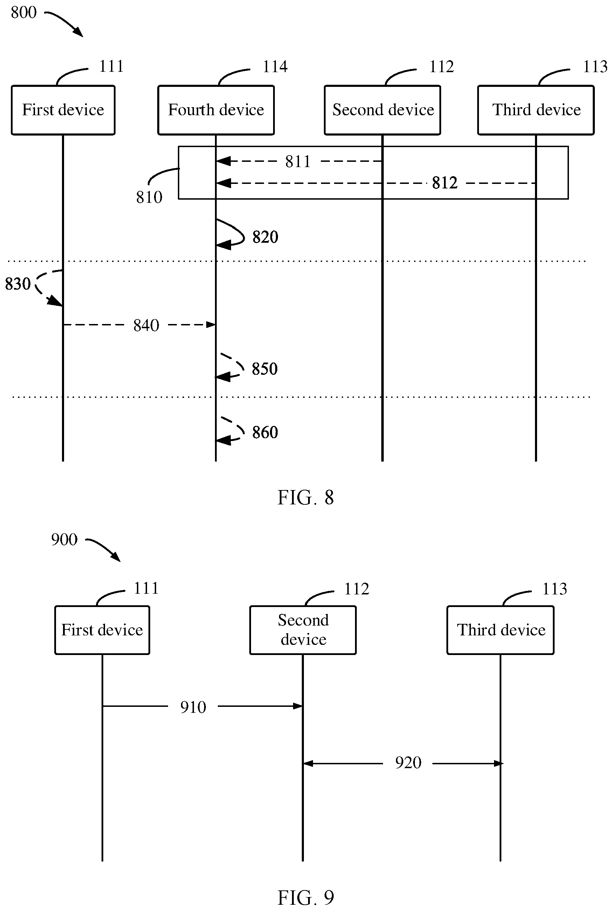

The solution for setting the duration field of the frame is described. In this way, even if the fourth device 114 sets the basic NAV because of the PPDU sent by the second device 112 or the third device 113, when the fourth device 114 receives the trigger frame from the first device 111, the basic NAV is reduced to 0. Therefore, the fourth device 114 may respond to the trigger frame. With reference to FIG. 8 and FIG. 9, the following describes a case in which the basic NAV is not set, so that the fourth device 114 may respond to the trigger frame from the first device 111.

FIG. 8 is a schematic diagram of another communication process 800 according to an embodiment of this disclosure. For convenience, the following describes FIG. 8 by using an example in FIG. 1. The process 800 may include the first device 111, the second device 112, the third device 113, and the fourth device 114. It should be understood that the process in FIG. 8 may include other additional steps that are not shown, or some shown steps may be omitted. The scope of this disclosure is not limited thereto. In this example, it is assumed that the first device 111 has a TXOP and is to allocate a first time period in the TXOP to the second device 112. In addition, it is assumed that the second device 112 performs data transmission with the third device 113 within the first time period, and the first device 111 triggers data transmission of the fourth device 114 after the first time period.

As shown in FIG. 8, the fourth device 114 receives a sixth protocol data unit within the first time period (810), and an RA field or a TA field in the sixth protocol data unit indicates address information of the second device 112. For example, the address information of the second device 112 may be a MAC address of the second device 112. Certainly, any other proper address information is also feasible. In some embodiments, the fourth device 114 may receive, within the first time period, a PPDU from the second device 112, where a TA field in the PPDU indicates the address information of the second device 112 (811). In some embodiments, the fourth device 114 may receive, within the first time period, a PPDU from the third device 113, where an RA field in the PPDU indicates the address information of the second device 112 (812).

The fourth device 114 keeps a basic NAV unchanged in response to the received sixth protocol data unit (820). That is, the basic NAV is not set based on the sixth protocol data unit. Therefore, the fourth device 114 does not set the basic NAV within the first time period, thereby ensuring that the fourth device 114 can respond when the first device 111 sends a trigger frame to the fourth device 114.

In some embodiments, the first device 111 may generate a seventh protocol data unit including a fifth frame, where the fifth frame indicates that the first time period is allocated for data transmission of the second device 112 (830). For example, the fifth frame may be a trigger frame or another similar frame. In this embodiment, the fifth frame carries the address information of the second device 112, for example, the MAC address or other similar address information. In some embodiments, the address information of the second device 112 may be carried in an RA field of the fifth frame. In some embodiments, the address information of the second device 12 may be carried in a user information (User Info) field of the fifth frame. Certainly, the address information of the second device 12 may alternatively be carried in the fifth frame in any other proper form. Then, the first device 111 sends the seventh protocol data unit (840). The fourth device 114 may receive the seventh protocol data unit and obtain the address information of the second device 112 from the seventh protocol data unit (850).

In some alternative embodiments, the fourth device 114 may receive an eighth protocol data unit from the first device 111. The eighth protocol data unit includes a sixth frame, and the sixth frame indicates that the first time period is allocated for data transmission of the second device 112. For example, the sixth frame may be a trigger frame or another similar frame. The fourth device 114 may further receive a ninth protocol data unit from the second device 112. The ninth protocol data unit is a first protocol data unit received by the fourth device 114 after the fourth device 114 receives a response to the eighth protocol data unit. The fourth device 114 may obtain the address information of the second device 112 from the ninth protocol data unit (860). For example, the fourth device 114 may obtain the address information of the second device 112 from a TA field of the ninth protocol data unit.

Based on the obtained address information of the second device 112, the fourth device 114 may determine whether an RA field or a TA field in a protocol data unit received within the first time period indicates the address information of the second device 112. It should be understood that, the address information of the second device 112 may alternatively be obtained in any other proper manner, which is not limited to the foregoing example.

FIG. 9 is a schematic diagram of another communication process 900 according to an embodiment of this disclosure. For convenience, the following describes FIG. 9 by using an example in FIG. 1. The process 900 may include the first device 111, the second device 112, and the third device 113. It should be understood that the process in FIG. 9 may include other additional steps that are not shown, or some shown steps may be omitted. The scope of this disclosure is not limited thereto. In this example, it is assumed that the first device 111 has a TXOP and is to allocate a first time period in the TXOP to the second device 112. In addition, it is assumed that the second device 112 performs data transmission with the third device 113 within the first time period, and the first device 111 triggers data transmission of the fourth device 114 after the first time period.

As shown in FIG. 9, the first device 111 sends a tenth protocol data unit including a seventh frame to the second device 112 (910). The seventh frame indicates that the first time period is allocated for data transmission of the second device 112. For example, the seventh frame is a trigger frame or another similar frame.

In response to tenth protocol data unit, the second device 112 transmits an eleventh protocol data unit to the third device 113 within the first time period (920). According to this embodiment of this disclosure, the eleventh protocol data unit includes a BSS color field. The BSS color field indicates a BSS color of a BSS corresponding to the first device 111. In other words, any PPDU sent by the second device 112 and the third device 113 within the first time period carries a BSS color field, and the BSS color field indicates the BSS color of the BSS corresponding to the first device 111.

In some embodiments, the second device 112 and the third device 113 may use a high efficiency (high efficiency, HE) PPDU frame format within the first time period. In some embodiments, the second device 112 and the third device 113 may use an extremely high throughput (extremely high throughput, EHT) PPDU frame format within the first time period.

In the process in FIG. 9, because all PPDUs sent by the second device 112 and the third device 113 carry the BSS color of the BSS of the first device 111, the fourth device 114 identifies these PPDUs as intra-BSS PPDUs, and does not set the basic NAV based on these PPDUs. Therefore, when the fourth device 114 receives a trigger frame from the first device 111, the basic NAV is 0, and therefore the fourth device 114 may respond to the trigger frame.

According to this embodiment of this disclosure, an improved solution is proposed for setting of a duration field of a frame at the first device 111 or the second device 112, so that even if the fourth device 114 sets the basic NAV within the first time period, the basic NAV can be reduced to 0 when the trigger frame is received after the first time period. An improved solution is proposed for updating of the basic NAV at the fourth device 114, the fourth device 114 does not set the basic NAV within the first time period. Therefore, the fourth device 114 may normally reply to the trigger frame from the first device 111 for the fourth device 114.

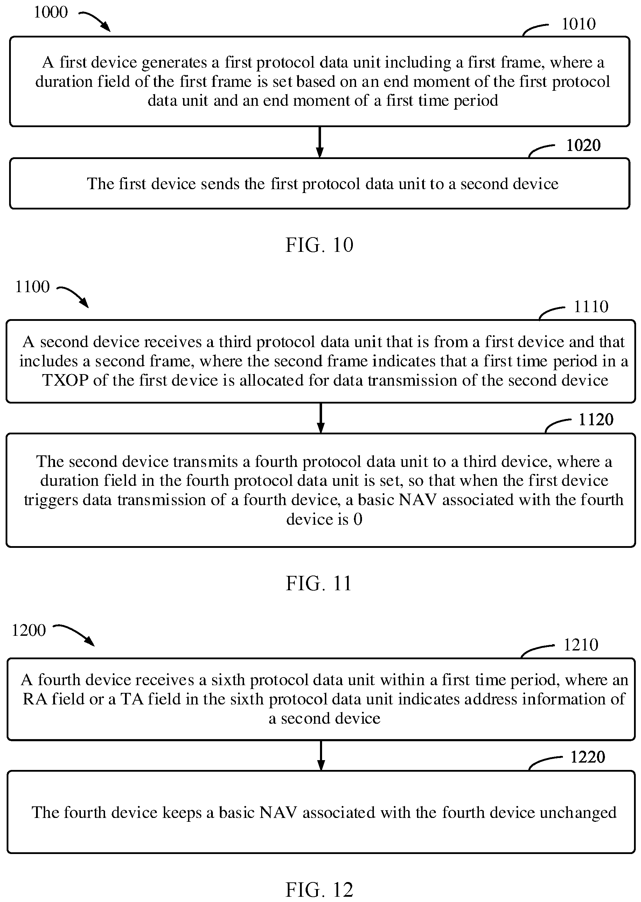

Corresponding to the foregoing communication processes, embodiments of this disclosure provide communication methods. The following describes this with reference to FIG. 10 to FIG. 13. FIG. 10 is a schematic flowchart of a communication method 1000 according to an embodiment of this disclosure. The method 1000 may be implemented at an AP device (for example, the first device 111 in FIG. 1), for example, may be implemented in an integrated circuit (integrated circuit, IC) of the AP device. Operations of the method 1000 correspond to the processes described with reference to FIG. 3 to FIG. 5. For convenience, the following describes FIG. 10 by using an example in FIG. 1. It should be understood that the method 1000 in FIG. 10 may include other additional steps that are not shown, or some shown steps may be omitted. The scope of this disclosure is not limited thereto.

As shown in FIG. 10, at block 1010, the first device 111 generates a first protocol data unit including a first frame. A duration field of the first frame is set based on an ending time of the first protocol data unit and an ending time of the first time period. The first frame may be any frame before the first time period. The first time period falls in a TXOP of the first device 111 and is allocated for data transmission of the second device 112.

In some embodiments, the first frame may be a trigger frame. The trigger frame indicates that the first time period is allocated for data transmission of the second device 112. For example, the first frame may be an MU-RTS TXS TF frame. Certainly, the first frame may alternatively be a trigger frame in any other proper form. In these embodiments, a duration field of the trigger frame may be set to a time length from the ending time of the first protocol data unit to the ending time of the first time period. In this manner, it can be simply and effectively ensured that a basic NAV set by the fourth device 114 within the first time period may be reduced to 0 when the first time period ends.

In some embodiments, the first frame may be an initial frame of the TXOP. In these embodiments, a duration field of the initial frame of the TXOP may be set to a sum of a time length from the ending time of the first protocol data unit to the ending time of the first time period and a predetermined time increment (for example, Delta T). In some embodiments, the predetermined time increment may be greater than an SIFS and less than or equal to a sum of twice the SIFS and a time length of a second protocol data unit generated by the first device 111 after the first time period (as shown in formula (1) above). In some embodiments, the predetermined time increment may be greater than or equal to a sum of the SIFS and a shortest frame time length and less than or equal to a sum of twice the SIFS and a time length of a second protocol data unit generated by the first device 111 after the first time period (as shown in formula (2) above). In some embodiments, the second protocol data unit may include a trigger frame. The trigger frame may indicate that the second time period in the TXOP is allocated for data transmission of the fourth device 114. Certainly, the second protocol data unit may alternatively include another proper frame.

At block 1020, the first device 111 sends the first protocol data unit to the second device 112. Therefore, the second device 112 may set a duration field of a subsequent frame based on a duration field in the first protocol data unit. In this way, the fourth device 114 correspondingly sets the basic NAV within the first time period, and when the first device 111 triggers data transmission of the fourth device 114, the basic NAV of the fourth device 114 may be reduced to 0. Therefore, the fourth device 114 may normally respond to triggering of the first device 111.

In some embodiments, the first device 111 is an AP device, and the second device 112 and the fourth device 114 are non-AP devices.

According to the method in FIG. 10, a duration field of a frame before the first time period may be set on an AP side, so that the basic NAV set by the fourth device 114 within the first time period may be reduced to 0 when the first time period ends, or the basic NAV set by the fourth device 114 within the first time period may be reduced to 0 before the first device 111 schedules uplink transmission by using a trigger frame.

FIG. 11 is a schematic flowchart of another communication method 1100 according to an embodiment of this disclosure. The method 1100 may be implemented at a non-AP device (for example, the second device 112 in FIG. 1), for example, may be implemented in an IC of the non-AP device. Operations of the method 1100 correspond to the processes described with reference to FIG. 6 and FIG. 7. For convenience, the following describes FIG. 11 by using an example in FIG. 1. It should be understood that the method 1100 in FIG. 11 may include other additional steps that are not shown, or some shown steps may be omitted. The scope of this disclosure is not limited thereto.

As shown in FIG. 11, at block 1110, the second device 112 receives a third protocol data unit from the first device 111. The third protocol data unit includes a second frame, and the second frame indicates that a first time period in a TXOP of the first device 111 is allocated for data transmission of the second device 112. In some embodiments, the second frame may be a trigger frame. For example, the second frame may be an MU-RTS TXS TF frame. Certainly, the second frame may alternatively be in any other proper form.

At block 1120, the second device 112 transmits a fourth protocol data unit to the third device 113 within the first time period. A duration field in the fourth protocol data unit is set, so that when the fourth device 114 receives a fifth protocol data unit including a third frame from the first device 111 and the third frame is used to trigger data transmission of the fourth device 114, a basic NAV associated with the fourth device 114 is 0.

In some embodiments, the second device 112 may set the duration field in the fourth protocol data unit to a time length from an ending time of the fourth protocol data unit to an ending time of the first time period. Therefore, when the second device 112 does not end TXOP sharing in advance, the basic NAV set by the fourth device 114 within the first time period may be reduced to 0 when a second time period ends. Further, a normal response of the fourth device 114 to a trigger frame after the first time period is not affected.

In some embodiments, the second device 112 may set the duration field in the fourth protocol data unit to a time length from an ending time of the fourth protocol data unit to an ending time of a response frame for the fourth protocol data unit. Therefore, it can be ensured that the basic NAV set by the fourth device 114 within the first time period may be reduced to 0 when the second time period ends, regardless of whether the second device 112 ends TXOP sharing in advance. Further, it can be ensured that the fourth device 114 normally responds to the trigger frame after the first time period.

In some embodiments, the first device 111 is an AP device, the second device 112 and the fourth device 114 are non-AP devices, and the third device 113 is an AP device or a non-AP device.

According to the method in FIG. 11, a duration field of a frame within the first time period may be set on a non-AP side, so that the basic NAV set by the fourth device 114 within the first time period may be reduced to 0 when the first time period ends.

FIG. 12 is a schematic flowchart of another communication method 1200 according to an embodiment of this disclosure. The method 1200 may be implemented at a non-AP device (for example, the fourth device 114 in FIG. 1), for example, may be implemented in an IC of the non-AP device. Operations of the method 1200 correspond to the processes described with reference to FIG. 8. For convenience, the following describes FIG. 12 by using an example in FIG. 1. It should be understood that the method 1200 in FIG. 12 may include other additional steps that are not shown, or some shown steps may be omitted. The scope of this disclosure is not limited thereto.

As shown in FIG. 12, at block 1210, the fourth device 114 receives a sixth protocol data unit within the first time period. An RA field or a TA field in the sixth protocol data unit indicates address information of the second device 112. The first time period falls in a TXOP of the first device 111 and is allocated for data transmission of the second device 112. In some embodiments, the fourth device 114 may receive a protocol data unit from any device. For example, the fourth device 114 may receive a protocol data unit transmitted between the second device 112 and the third device 113. In some embodiments, the address information of the second device 112 includes a MAC address of the second device 112. Certainly, address information in another form is also feasible.

At block 1220, the fourth device 114 keeps a basic NAV associated with the fourth device 114 unchanged. To be specific, in response to the received sixth protocol data unit, the fourth device 114 does not set the basic NAV, to keep the basic NAV at 0.

In some embodiments, the fourth device 114 may receive a seventh protocol data unit from the first device 111. The seventh protocol data unit includes a fifth frame, and the fifth frame indicates that the first time period is allocated for data transmission of the second device 112. In some embodiments, the fifth frame may be a trigger frame. For example, the fifth frame may be an MU-RTS TXS TF frame. Certainly, the fifth frame may alternatively be in any other proper form. Then, the fourth device 114 may obtain the address information of the second device 112 from the seventh protocol data unit. Therefore, whether the sixth protocol data unit including the address information is received may be determined based on the obtained address information.

In some alternative embodiments, the fourth device 114 may receive an eighth protocol data unit from the first device 111. The eighth protocol data unit includes a sixth frame, and the sixth frame indicates that the first time period is allocated for data transmission of the second device 112. In some embodiments, the sixth frame may be a trigger frame. For example, the sixth frame may be an MU-RTS TXS TF frame. Certainly, the sixth frame may alternatively be in any other proper form. Then, the fourth device 114 may receive a ninth protocol data unit from the second device 112. The ninth protocol data unit is a first protocol data unit received by the fourth device 114 after the fourth device 114 receives a response to the eighth protocol data unit. The fourth device 114 may obtain the address information of the second device 112 from the ninth protocol data unit. Therefore, whether the sixth protocol data unit including the address information is received may be determined based on the obtained address information.

In some embodiments, the first device 111 is an AP device, the second device 112 and the fourth device 114 are non-AP devices, and the third device 113 is an AP device or a non-AP device.

According to the method in FIG. 12, the fourth device 114 does not set the basic NAV within the first time period based on a PPDU in which an RA field or a TA field indicates the address information of the second device 112, so that the fourth device 114 can normally respond, after the first time period, to a trigger frame sent by the first device 111.

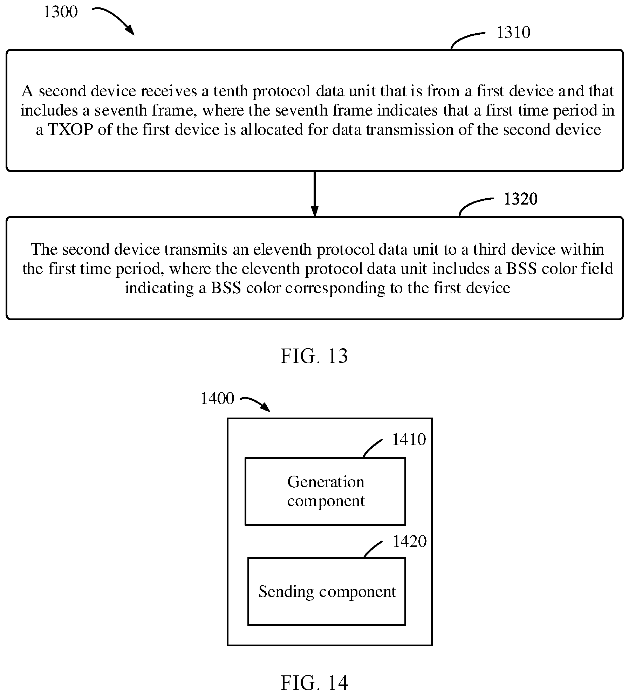

FIG. 13 is a schematic flowchart of another communication method 1300 according to an embodiment of this disclosure. The method 1300 may be implemented at a non-AP device (for example, the second device 112 in FIG. 1), for example, may be implemented in an IC of the non-AP device. Operations of the method 1300 correspond to the processes described with reference to FIG. 9. For convenience, the following describes FIG. 13 by using an example in FIG. 1. It should be understood that the method 1300 in FIG. 13 may include other additional steps that are not shown, or some shown steps may be omitted. The scope of this disclosure is not limited thereto.

As shown in FIG. 13, at block 1310, the second device 112 receives a tenth protocol data unit from the first device 111. The tenth protocol data unit includes a seventh frame, and the seventh frame indicates that a first time period in a TXOP of the first device 111 is allocated for data transmission of the second device 112. In some embodiments, the seventh frame may be a trigger frame. For example, the seventh frame may be an MU-RTS TXS TF frame. Certainly, the seventh frame may alternatively be in any other proper form.

At block 1320, the second device 112 transmits an eleventh protocol data unit to the third device 113 within the first time period. The eleventh protocol data unit includes a BSS color field. The BSS color field indicates a BSS color of a BSS corresponding to the first device 111. In other words, protocol data units sent by the second device 112 and the third device 113 within the first time period both carry the BSS color of the BSS of the first device 111. Therefore, the fourth device 114 identifies these frames as intra-BBS PPDUs, and does not set a basic NAV. When the fourth device 114 receives a trigger frame from the first device 111 after the first time period, the basic NAV is 0, and therefore the fourth device 114 may normally respond to the trigger frame.

In some embodiments, the first device 111 is an AP device, the second device 112 and the fourth device 114 are non-AP devices, and the third device 113 is an AP device or a non-AP device.

According to the method in FIG. 13, the fourth device 114 does not set the basic NAV within the first time period based on a PPDU between the second device 112 and the third device 113, so that the fourth device 114 can normally respond, after the first time period, to the trigger frame sent by the first device 111.

Corresponding to the foregoing communication methods, embodiments of this disclosure further provide communication apparatuses and device. The following describes this with reference to FIG. 14 to FIG. 18. FIG. 14 is a schematic block diagram of a communication apparatus 1400 according to an embodiment of this disclosure. The apparatus 1400 may be implemented at an AP device (for example, the first device 111 in FIG. 1). For convenience, the following describes FIG. 14 by using an example in FIG. 1. The apparatus 1400 may be a part of the AP device, or may be the AP device. It should be understood that the apparatus 1400 may include more additional components than the shown components or omit a part of the shown components. This is not limited in this embodiment of this disclosure.

As shown in FIG. 14, the apparatus 1400 may include a generation component 1410 and a sending component 1420. The generation component 1410 is configured to generate a first protocol data unit including a first frame, where a duration field of the first frame is set based on an ending time of the first protocol data unit and an ending time of a first time period, and the first time period falls in a TXOP of the first device 111 and is allocated for data transmission of the second device 112. The sending component 1420 is configured to send the first protocol data unit to the second device 112.

In some embodiments, the first frame is a trigger frame. The trigger frame may indicate that the first time period is configured for data transmission of the second device 112. In these embodiments, a duration field of the trigger frame is set to a time length from the ending time of the first protocol data unit to the ending time of the first time period.

In some embodiments, the first frame is an initial frame of the TXOP, and a duration field of the initial frame is set to a sum of a time length from the ending time of the first protocol data unit to the ending time of the first time period and a predetermined time increment. In some embodiments, the predetermined time increment may be greater than a short interframe space and less than or equal to a sum of twice the short interframe space and a time length of a second protocol data unit generated by the first device after the first time period. In some embodiments, the predetermined time increment may be greater than or equal to a sum of a short interframe space and a shortest frame time length and less than or equal to a sum of twice the short interframe space and a time length of a second protocol data unit generated by the first device after the first time period. In some embodiments, the second protocol data unit may include a trigger frame. The trigger frame may indicate that the second time period in the TXOP is configured for data transmission of the fourth device 114.

In some embodiments, the first device 111 is an AP device, and the second device 112 and the fourth device 114 are non-AP devices.

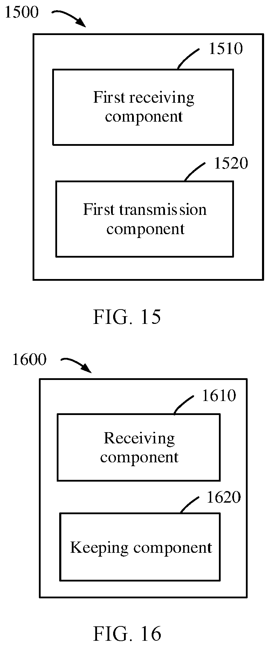

FIG. 15 is a schematic block diagram of another communication apparatus 1500 according to an embodiment of this disclosure. The apparatus 1500 may be implemented at a non-AP device (for example, the second device 112 in FIG. 1). For convenience, the following describes FIG. 15 by using an example in FIG. 1. The apparatus 1500 may be a part of the non-AP device, or may be the non-AP device. It should be understood that the apparatus 1500 may include more additional components than the shown components or omit a part of the shown components. This is not limited in this embodiment of this disclosure.

As shown in FIG. 15, the apparatus 1500 may include a first receiving component 1510 and a first transmission component 1520. The first receiving component 1510 is configured to receive a third protocol data unit from the first device 111. The third protocol data unit includes a second frame, and the second frame indicates that a first time period in a TXOP of the first device 111 is allocated for data transmission of the second device 112. The first transmission component 1520 is configured to transmit a fourth protocol data unit to the third device 113 within the first time period. A duration field in the fourth protocol data unit is set, so that when the fourth device 114 receives a fifth protocol data unit including a third frame from the first device 111 and the third frame is used to trigger data transmission of the fourth device 114, a basic NAV associated with the fourth device 114 is 0.

In some embodiments, the duration field in the fourth protocol data unit may be set to a time length from an ending time of the fourth protocol data unit to an ending time of the first time period. In some alternative embodiments, the duration field in the fourth protocol data unit may be set to a time length from an ending time of the fourth protocol data unit to an ending time of a response frame for the fourth protocol data unit.

In some embodiments, the first device 111 is an AP device, the second device 112 and the fourth device 114 are non-AP devices, and the third device 113 is an AP device or a non-AP device.

FIG. 16 is a schematic block diagram of another communication apparatus 1600 according to an embodiment of this disclosure. The apparatus 1600 may be implemented at a non-AP device (for example, the fourth device 114 in FIG. 1). For convenience, the following describes FIG. 16 by using an example in FIG. 1. The apparatus 1600 may be a part of the non-AP device, or may be the non-AP device. It should be understood that the apparatus 1600 may include more additional components than the shown components or omit a part of the shown components. This is not limited in this embodiment of this disclosure.

As shown in FIG. 16, the apparatus 1600 may include a receiving component 1610 and a keeping component 1620. The receiving component 1610 is configured to receive a sixth protocol data unit within a first time period. An RA field or a TA field in the sixth protocol data unit indicates address information of the second device 112, and the first time period falls in a TXOP of the first device 111 and is allocated for data transmission of the second device 112. The keeping component 1620 is configured to keep a basic NAV associated with the fourth device 114 unchanged.

In some embodiments, the apparatus 1600 may further include a first receiving sub-component and a first obtaining sub-component. The first receiving sub-component may be configured to receive a seventh protocol data unit from the first device 111. The seventh protocol data unit includes a fifth frame, and the fifth frame indicates that the first time period is allocated for data transmission of the second device 112. The first obtaining sub-component may be configured to obtain the address information of the second device 112 from the seventh protocol data unit.

In some embodiments, the apparatus 1600 may further include a second receiving sub-component, a third receiving sub-component, and a second obtaining sub-component. The second receiving sub-component may be configured to receive an eighth protocol data unit from the first device 111. The eighth protocol data unit includes a sixth frame, and the sixth frame indicates that the first time period is allocated for data transmission of the second device 112. The third receiving sub-component may be configured to receive a ninth protocol data unit from the second device 112. The ninth protocol data unit is a first protocol data unit received by the fourth device 114 after the fourth device 114 receives a response to the eighth protocol data unit. The second obtaining sub-component may be configured to obtain the address information of the second device 112 from the ninth protocol data unit.

In some embodiments, the first device 111 is an AP device, and the second device 112 is a non-AP device.

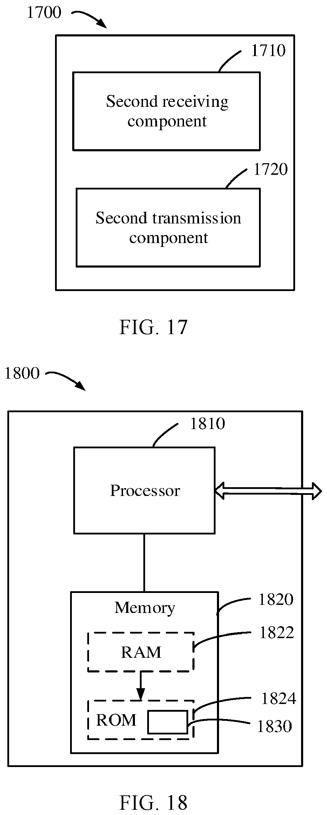

FIG. 17 is a schematic block diagram of another communication apparatus 1700 according to an embodiment of this disclosure. The apparatus 1700 may be implemented at a non-AP device (for example, the second device 112 in FIG. 1). For convenience, the following describes FIG. 17 by using an example in FIG. 1. The apparatus 1700 may be a part of the non-AP device, or may be the non-AP device. It should be understood that the apparatus 1700 may include more additional components than the shown components or omit a part of the shown components. This is not limited in this embodiment of this disclosure.

As shown in FIG. 17, the apparatus 1700 may include a second receiving component 1710 and a second transmission component 1720. The second receiving component 1710 is configured to receive a tenth protocol data unit from the first device 111. The tenth protocol data unit includes a seventh frame, and the seventh frame indicates that a first time period in a TXOP of the first device 111 is allocated for data transmission of the second device 112. The second transmission component 1720 is configured to transmit an eleventh protocol data unit to the third device 113 within the first time period. The eleventh protocol data unit includes a BSS color field, and the BSS color field indicates a BSS color of a BSS corresponding to the first device 111.

In some embodiments, the first device 111 is an AP device, the second device 112 is a non-AP device, and the third device 113 is an AP device or a non-AP device.

FIG. 18 is a simplified block diagram of a communication device 1800 suitable for implementing an embodiment of this disclosure. The device 1800 may be provided to implement an AP device or a non-AP device. As shown in the figure, the device 1800 includes one or more processors 1810 and one or more memories 1820 coupled to the processor 1810.

The processor 1810 may be of any type suitable for a local technical network, and may include, as a limiting example, one or more of the following: a general-purpose computer, a dedicated computer, a microprocessor, a digital signal processor, and a processor that is based on a multi-core processor architecture. The device 1800 may have a plurality of processors, such as application-specific integrated circuit chips, which in time belong to a clock synchronized with a main processor.

The memory 1820 may include one or more nonvolatile memories and one or more volatile memories. An example of the nonvolatile memory includes but is not limited to a read-only memory (read-only memory, ROM) 1824, an electrically programmable read-only memory (electrically programmable read only memory, EPROM), a flash memory, a hard disk drive, a compact disc (compact disc, CD), a digital video (digital video disc, DVD), and another magnetic storage and/or optical storage apparatuses. An example of the volatile memory includes but is not limited to a random access memory (random access memory, RAM) 1822 and another volatile memory that does not last for power-off duration.

A computer program 1830 includes computer-executable instructions executed by an associated processor 1810. The program 1830 may be stored in the ROM 1820. The processor 1810 may perform any proper action and processing by loading the program 1830 into the RAM 1820.

This embodiment of this disclosure may be implemented with the help of the program 1830, so that the device 1800 performs processing of this disclosure discussed with reference to FIG. 3 to FIG. 9. The device 1800 may correspond to any one of the foregoing communication apparatuses 1400 to 1700, and a functional module in each of the communication apparatuses 1400 to 1700 is implemented by using software of the device 1800. In other words, the functional module included in each of the communication apparatuses 1400 to 1700 is generated after the processor 1810 of the device 1800 reads the program code stored in the memory 1820. Embodiments of this disclosure may alternatively be implemented by using hardware or a combination of software and hardware.

In some embodiments, the program 1830 may be tangibly included in a computer-readable medium. The computer-readable medium may be included in the device 1800 (for example, in the memory 1820) or another storage device that may be accessed by the device 1800. The program 1830 may be loaded from the computer-readable medium into the RAM 1822 for execution. The computer-readable medium may include any type of tangible nonvolatile memory, such as a ROM, an EPROM, a flash memory, a hard disk drive, a CD, or a DVD.

In some embodiments, the device 1800 may further include one or more communication modules (not shown). The one or more communication modules may be coupled to the processor 1810. The one or more communication modules may be used for bidirectional communication. The one or more communication modules each may have a communication interface for communication. The communication interface may represent any interface required for communication with another network element.

In general, various example embodiments of this disclosure may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of embodiments of this disclosure are illustrated or described as block diagrams or flowcharts, or represented by some other figures, it is understood that the blocks, apparatuses, systems, techniques, or methods described herein may be implemented as non-limiting examples in hardware, software, firmware, dedicated circuits, logic, general-purpose hardware, controllers, other computing devices, or some combinations thereof. An example of a hardware device that may be used to implement embodiments of this disclosure includes but is not limited to a field-programmable gate array (field-programmable gate array, FPGA), an application-specific integrated circuit (application-specific integrated circuit, ASIC), an application-specific standard part (application-specific standard part, ASSP), a system on chip (system on chip, SOC), a complex programmable logic device (complex programmable logic device, CPLD), and the like.

For example, embodiments of this disclosure may be described in context of machine-executable instructions. The machine-executable instructions are included in, for example, a program module executed in a device on a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or in a distributed device. In the distributed device, the program module may be located in both a local storage medium and a remote storage medium.

Computer program code used to implement the methods of this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed totally on a computer, partially on a computer, as an independent software package, partially on a computer and partially on a remote computer, or all on a remote computer or server.

In context of this disclosure, the computer program code or related data may be carried by any proper carrier, so that a device, an apparatus, or a processor can perform various processing and operations described above. For example, the carrier includes a signal, a computer-readable medium, and the like.

For example, the signal may include propagating signals in electrical, optical, radio, sound, or other forms, such as a carrier and an infrared signal.

The machine-readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any proper combination thereof. More detailed examples of the machine-readable storage medium include an electrical connection with one or more wires, a portable computer disk, hard disk drive, a RAM, a ROM, an EPROM or a flash memory, an optical storage device, a magnetic storage device, or any proper combination thereof.

In addition, while operations are described in a particular order, this should not be understood as requiring such operations to be completed in the particular order shown or in a successive order, or performing all the illustrated operations to obtain the desired results. In some cases, multitasking or parallel processing is advantageous. Similarly, while the foregoing descriptions include some specific implementation details, this should not be construed as limitations on the scope of any invention or claims, but rather as descriptions of specific embodiments that may be specific to a particular invention. Some features described in this specification in the context of separate embodiments may alternatively be integrated into a single embodiment. Conversely, various features that are described in the context of a single embodiment may alternatively be implemented separately in a plurality of embodiments or in any proper subcombination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

**Claims**

1. A communication method, comprising:

   generating, by a first device, a first protocol data unit comprising a first frame, wherein a duration field of the first frame is set based on an ending time of the first protocol data unit and an ending time of a first time period, and the first time period falls in a transmission opportunity of the first device and is allocated for data transmission of a second device; and
   sending, by the first device, the first protocol data unit to the second device.

2. The method according to claim 1, wherein the first frame is a trigger frame, and the duration field is set to a time length from the ending time of the first protocol data unit to the ending time of the first time period.

3. The method according to claim 1, wherein the first frame is an initial frame of the transmission opportunity, and the duration field is set to a sum of a time length from the ending time of the first protocol data unit to the ending time of the first time period and a predetermined time increment.

4. The method according to claim 3, wherein the predetermined time increment is greater than a short interframe space and less than or equal to a sum of twice the short interframe space and a time length of a second protocol data unit generated by the first device after the first time period.

5. The method according to claim 4, wherein the second protocol data unit comprises a trigger frame.

6. The method according to any one of claims 1 to 5, wherein the first device is an access point device, and the second device is a non-access point device.

7. A communication method, comprising:

   receiving, by a second device, a third protocol data unit from a first device, wherein the third protocol data unit comprises a second frame, and the second frame indicates that a first time period in a transmission opportunity of the first device is allocated for data transmission of the second device; and
   transmitting, by the second device, a fourth protocol data unit to a third device within the first time period, wherein a duration field in the fourth protocol data unit is set, so that when a fourth device receives a fifth protocol data unit that is from the first device and that comprises a third frame, and the third frame is used to trigger data transmission of the fourth device, a basic network allocation vector associated with the fourth device is 0.

8. The method according to claim 7, wherein the duration field in the fourth protocol data unit is set to a time length from an ending time of the fourth protocol data unit to an ending time of the first time period.

9. The method according to claim 7, wherein the duration field in the fourth protocol data unit is set to a time length from an ending time of the fourth protocol data unit to an ending time of a response frame for the fourth protocol data unit.

10. The method according to any one of claims 7 to 9, wherein the first device is an access point device, the second device and the fourth device are non-access point devices, and the third device is an access point device or a non-access point device.

11. A communication method, comprising:

    receiving, by a fourth device, a sixth protocol data unit within a first time period, wherein a receiver address field or a transmitter address field in the sixth protocol data unit indicates address information of a second device, and the first time period falls in a transmission opportunity of a first device and is allocated for data transmission of the second device; and
    keeping, by the fourth device, a basic network allocation vector associated with the fourth device unchanged.

12. The method according to claim 11, further comprising:

    receiving, by the fourth device, a seventh protocol data unit from the first device, wherein the seventh protocol data unit comprises a fifth frame, and the fifth frame indicates that the first time period is allocated for data transmission of the second device; and
    obtaining, by the fourth device, the address information of the second device from the seventh protocol data unit.

13. The method according to claim 11, further comprising:

    receiving, by the fourth device, an eighth protocol data unit from the first device, wherein the eighth protocol data unit comprises a sixth frame, and the sixth frame indicates that the first time period is allocated for data transmission of the second device;
    receiving, by the fourth device, a ninth protocol data unit from the second device, wherein the ninth protocol data unit is a first protocol data unit received by the fourth device after the fourth device receives a response to the eighth protocol data unit; and
    obtaining, by the fourth device, the address information of the second device from the ninth protocol data unit.

14. The method according to any one of claims 11 to 13, wherein the first device is an access point device, and the second device and the fourth device are non-access point devices.

15. A communication method, comprising:

receiving, by a second device, a tenth protocol data unit from a first device, wherein the tenth protocol data unit comprises a seventh frame, and the seventh frame indicates that a first time period in a transmission opportunity of the first device is allocated for data transmission of the second device; and
transmitting, by the second device, an eleventh protocol data unit to a third device within the first time period, wherein the eleventh protocol data unit comprises a basic service set color field, and the basic service set color field indicates a basic service set color of a basic service set corresponding to the first device.

16. The method according to claim 15, wherein the first device is an access point device, the second device is a non-access point device, and the third device is an access point device or a non-access point device.

17. A communication device, comprising:

    a processor, and
    a memory, comprising computer program code, wherein
    the memory and the computer program code are configured to work with the processor to enable the communication device to perform the method according to any one of claims 1 to 6.

18. A communication device, comprising:

    a processor, and
    a memory, comprising computer program code, wherein
    the memory and the computer program code are configured to work with the processor to enable the communication device to perform the method according to any one of claims 7 to 10 or claim 15 or 16.

19. A communication device, comprising:

    a processor, and
    a memory, comprising computer program code, wherein
    the memory and the computer program code are configured to work with the processor to enable the communication device to perform the method according to any one of claims 11 to 14.

20. A computer-readable storage medium, comprising machine-executable instructions, wherein when the machine-executable instructions are executed by a device, the device is enabled to perform the method according to any one of claims 1 to 6.

21. A computer-readable storage medium, comprising machine-executable instructions, wherein when the machine-executable instructions are executed by a device, the device is enabled to perform the method according to any one of claims 7 to 10 or claim 15 or 16.

22. A computer-readable storage medium, comprising machine-executable instructions, wherein when the machine-executable instructions are executed by a device, the device is enabled to perform the method according to any one of claims 11 to 14.

FIG. 1

FIG. 2

300

111

First device

310

320

112

Second
device

330

FIG. 3

400

Transmission opportunity (TXOP)

First time period

Second time period

| | 401 | 402 | | | 406 | |
|---|---|---|---|---|---|---|

First device 111: CTS-to-self | MU-RTS TXS TF | ... | TF

Second device 112: CTS (403) | SU PPDU (404) | ...

Third device 113: BA (405) | ...

Fourth device 114: Basic NAV | TB PPDU (407)

FIG. 4

FIG. 5

Transmission opportunity (TXOP) extension

Transmission opportunity (TXOP)

First time period

500

First device 111 — 501 CTS-to-self

Second device 112 — 502 MU-RTS TXS TF — 503 CTS — 504 SU PPDU — 506 TF

Third device 113 — 505 BA

Fourth device 114 — 507 TB PPDU

Delta_T

Basic NAV

FIG. 6

FIG. 7

FIG. 8

FIG. 9

1000

1010

A first device generates a first protocol data unit including a first frame, where a duration field of the first frame is set based on an end moment of the first protocol data unit and an end moment of a first time period

1020

The first device sends the first protocol data unit to a second device

FIG. 10

1100

1110

A second device receives a third protocol data unit that is from a first device and that includes a second frame, where the second frame indicates that a first time period in a TXOP of the first device is allocated for data transmission of the second device

1120

The second device transmits a fourth protocol data unit to a third device, where a duration field in the fourth protocol data unit is set, so that when the first device triggers data transmission of a fourth device, a basic NAV associated with the fourth device is 0

FIG. 11

1200

1210

A fourth device receives a sixth protocol data unit within a first time period, where an RA field or a TA field in the sixth protocol data unit indicates address information of a second device

1220

The fourth device keeps a basic NAV associated with the fourth device unchanged

FIG. 12

1300

1310

A second device receives a tenth protocol data unit that is from a first device and that includes a seventh frame, where the seventh frame indicates that a first time period in a TXOP of the first device is allocated for data transmission of the second device

1320

The second device transmits an eleventh protocol data unit to a third device within the first time period, where the eleventh protocol data unit includes a BSS color field indicating a BSS color corresponding to the first device

FIG. 13

1400

1410

Generation component

1420

Sending component

FIG. 14

1500

1510

First receiving
component

1520

First transmission
component

FIG. 15

1600

1610

Receiving
component

1620

Keeping component

FIG. 16

1700

1710

Second receiving component

1720

Second transmission component

FIG. 17

1800

1810

Processor

1820

Memory

1822

RAM

1824

ROM

1830

FIG. 18

## INTERNATIONAL SEARCH REPORT

International application No.

**PCT/CN2022/110644**

**A. CLASSIFICATION OF SUBJECT MATTER**

H04W 72/12(2009.01)i; H04W 74/08(2009.01)i

According to International Patent Classification (IPC) or to both national classification and IPC

**B. FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 时间段, BSS颜色, 初始帧, 结束时刻, 接入点, wifi, duration, BSS, TXOP, nav, ap, color, BSSID, mac, cts-to-self

**C. DOCUMENTS CONSIDERED TO BE RELEVANT**

| Category* | Citation of document, with indication, where appropriate, of the relevant passages | Relevant to claim No. |
|---|---|---|
| X | CN 112188563 A (HUAWEI TECHNOLOGIES CO., LTD.) 05 January 2021 (2021-01-05) description, paragraphs [0104]-[0134] | 1-6, 17, 20 |
| A | CN 112188563 A (HUAWEI TECHNOLOGIES CO., LTD.) 05 January 2021 (2021-01-05) description, paragraphs [0104]-[0134] | 7-16, 18, 19, 21, 22 |
| A | CN 105874847 A (HUAWEI TECHNOLOGIES CO., LTD.) 17 August 2016 (2016-08-17) entire document | 1-22 |
| A | CN 102695286 A (ZTE CORP.) 26 September 2012 (2012-09-26) entire document | 1-22 |
| A | WO 2016187299 A1 (QUALCOMM INC.) 24 November 2016 (2016-11-24) entire document | 1-22 |
| A | INTEL CORP. "Channel Access Mechanism for NR-unlicensed" *3GPP TSG RAN WG1 Meeting #98bis R1-1910640*, 20 October 2019 (2019-10-20), entire document | 1-22 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 October 2022** | **27 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/110644**

| Patent document cited in search report | | | Publication date (day/month/year) | Patent family member(s) | | | Publication date (day/month/year) |
|---|---|---|---|---|---|---|---|
| CN | 112188563 | A | 05 January 2021 | WO | 2021000709 | A1 | 07 January 2021 |
| | | | | EP | 3975613 | A1 | 30 March 2022 |
| | | | | US | 2022123881 | A1 | 21 April 2022 |
| CN | 105874847 | A | 17 August 2016 | WO | 2015096065 | A1 | 02 July 2015 |
| | | | | US | 2016295612 | A1 | 06 October 2016 |
| CN | 102695286 | A | 26 September 2012 | | None | | |
| WO | 2016187299 | A1 | 24 November 2016 | US | 2016262184 | A1 | 08 September 2016 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110905967